# EUROPEAN PATENT SPECIFICATION

(11) **EP 2 819 521 B1**
(45) Date of publication and mention of the grant of the patent: **25.05.2016**
(21) Application number: 13713244.5
(22) Date of filing: 15.02.2013
(51) Int. Cl.: A21C 11/00

(54) **PASTA CUTTING AND FOLDING MACHINE**
VORRICHTUNG ZUM SCHNEIDEN UND FALTEN VON PASTA
APPAREIL DE DÉCOUPE ET DE PLIAGE DE PÂTES

(30) Priority: 27.02.2012 IT FI20120039
(43) Date of publication of application: 07.01.2015
(73) Proprietor: Landucci S.r.l., 51100 Pistoia (IT)
(72) Inventor: LANDUCCI, Lando, 51100 Pistoia (IT)
(74) Representative: Mannucci, Michele
(86) International application number: PCT/IB2013/051221
(87) International publication number: WO 2013/128319

(56) References cited:
- FR-A- 620 380
- GB-A- 1 191 437
- IT-A1- FI 930 257
- DominioniPuntoPasta: "Dominioni P&P - Farfalle Machine", , 16 March 2009 (2009-03-16), XP002684092, Retrieved from the Internet: URL:http://www.youtube.com/watch?v=GQ-3Yvu Bpgg [retrieved on 2012-09-26]

## Description

### Technical field

The invention relates to improvements to machines for producing pasta. More in particular, the invention relates to improvements to cutting and folding machines for producing bow tie shaped pasta and the like, which is obtained by cutting pieces of pasta from a continuous sheet, which are subsequently folded in a central area to take the form of a bow tie or a butterfly.

### State of the art

Cutting and folding machines of this type are known per se. Examples of these machines are described, for instance, in Italian patents 1265901 and 1334674.

These machines generally comprise a die and a punch cooperating with each other to cut the pasta. The die is also combined with "folding hands" cooperating with the die to perform the fold, in a substantially central area, on the pieces of cut pasta. Moreover, at least one extractor comb is associated with the die, to extract the cut and folded pasta from said die. The various cutting, folding and extraction members are controlled by a central motorization, so as to perform synchronized movements. Suitable kinematic mechanisms are provided to operate the punch, the hands and the extractor comb in synchronism. In particular, the extractor comb is controlled through a cam and rocker mechanism, wherein the cam is made to rotate by the motorization that controls the movement of the punch and of the hands and wherein the rocker is held in contact with the cam through suitable compression springs.

A cutting and folding machine according to the preamble of claim 1 is known from the video retrievable from the internet at the following URL: https://www.youtube.com/watch?v=GQ-3YvuBpgg.

Prior art cutting and folding machines are particularly complex from the point of view of the operating mechanisms of the extractor comb.

### Summary of the invention

The present invention pertains to a cutting and folding machine which entirely or partly overcomes one or more of the problems of prior art machines.

An object of some embodiments of the invention is to obtain a machine with an extractor comb movement system, which is more efficient than conventional systems. This object is achieved with a machine according to claim 1.

In substance, according to the invention it is provided that the extractor comb is operated with a reciprocating motion through a shaft rotating about its own axis with a reciprocating rotational motion controlled by at least one electronically controlled electric motor, synchronized with the movements of the remaining moving parts of the machine. The motor is preferably a brushless motor. In particularly advantageous embodiments of the invention, the shaft for operating the extractor comb is controlled in reciprocating rotational motion through two distinct electronically controlled electric motors, preferably two brushless motors, arranged at opposite ends of the shaft. In this way, balanced operation of the shaft is obtained, preventing torsional deformations thereof, without the need to oversize the cross section of the shaft.

The electric motor or motors can be rotary electric motors or linear electric motors. In the first case, the movement will be a reciprocating rotational movement, while in the second it will be a reciprocating translational motion. In both cases an electronic control enables synchronization of the movements of the comb with the movements of the remaining moving parts of the machine. In the case of linear motors, it may be advantageous to provide linear guides, for example arranged at the ends or in intermediate positions along the extension of the moving element.

The use of electric motors separate with respect to the main motorization of the machine enables substantial simplification of the whole structure of the machine and more efficient and noiseless operation thereof.

Moreover, the electric motor or motors for operating the extractor comb can be deactivated in a position in which the extractor comb remains idle. In this way, it is possible to operate the machine without the intervention of the extractor comb. This can be useful, or even necessary, in the production of some types of pasta. The operator can therefore set the extractor combs to operate or to remain idle through a simple control on a simple electronic interface, such as a keypad, push button panel, touch screen panel or the like.

Moreover, the operation of the control shaft of the extractor comb through electronically controlled electric motors enables the stroke of the extractor comb to be set at will, as a function of the type of pasta to be produced.

Due to the presence of electric motors in place of a kinematic chain for operation through the main motorization, it is also possible to manually move the extractor comb when the machine is stopped, for example to perform adjustment, maintenance or control operations.

Preferably, the electric motor or motors that operate the extractor comb are arranged so as to apply a balanced force to reduce inertial deformations of the mechanical members. In one embodiment, this is obtained by providing two separate electric motors, associated with the two opposite ends of the shaft or other element that carries the supporting arms of the extractor comb. The two motors are controlled in parallel with high precision, so as to impose coordinated temporal movements at the two ends of the shaft or element and therefore of the extractor comb. The use of two separate and parallel motors enables reduction of inertial deformations in the reciprocating movement of the mechanical parts. Moreover, particularly high accelerations are obtained. The configuration is suitable also to operate combs of considerable length, for machines with large transverse dimensions. For machines with smaller transverse dimensions it is also possible to obtain satisfactory results with a single motor. Preferably, it will be placed in an intermediate area, preferably approximately at the center of the longitudinal extension of the extractor comb, i.e. of the transverse extension of the machine. In this way it is possible to reduce the torsional deformations caused by inertia in the acceleration and deceleration steps of the extractor comb, and in particular of the shaft or other element that moves the arms carrying the extractor comb.

It has surprisingly been found that with these arrangements it is possible to use separate motors to operate the extractor comb, notwithstanding the very narrow tolerances and high dynamic stresses caused by the speeds and accelerations of the mechanical members of the machine.

The use of one or more motors separate from the central motorization for operation of the extractor comb enables particular advantages to be achieved and problems specific to cutting and folding machines to be solved. Among these, it is of particular importance to be able to modify, with high precision, the relationship between the movement of the comb and the movement of the remaining parts of the machine. In particular, it is possible to modify, with high precision, the position of the comb as a function of the position of the remaining parts (folding hands) in each moment of the operating cycle.

Further advantageous features and embodiments of the invention are described hereunder and are set forth in the appended claims, which form an integral part of the present description. The brief description provided above identifies characteristics of the various embodiments of the present invention so that the following detailed description can be better understood and so that the contributions to the art may be better appreciated. Naturally, there are other features of the invention which will be described below and will be set forth in the appended claims. It must be understood that the various embodiments of the invention are not limited in their application to the structural details and to the arrangements of components described in the following description or illustrated in the drawings. The invention can be implemented in other embodiments and put into practice in various ways. Moreover, it must be understood that the phraseology and terminology employed herein are purely for descriptive purposes and must not be considered limiting.

Therefore, those skilled in the art will understand that the concept on which the description is based can be used as a basis to design other structures, other methods and/or other systems to implement the various objects of the present invention. Consequently, it is important that the claims are considered as defining the scope of the present invention.

### Brief description of the drawings

Fig.1 shows a partial and sectional axonometric view of a cutting and folding machine in which the invention is embodied;
Fig.2 shows a schematic sectional view according to a vertical plane of the machine of Fig.1;
Fig.3 schematically shows the members for cutting, folding and extracting the pasta;
Fig.4 shows an axonometric view of the operating mechanism of the extractor comb;
Fig.5 shows an exploded view of the slide for operating the punch;
Fig.6 shows a type of pasta that can be obtained with the machine of the previous figures;
Fig.7 shows an axonometric view, similar to the view of Fig. 4, of the extractor comb, of the operating shaft and of the motor, in a modified embodiment.

### Detailed description of an embodiment

The detailed description below of examples of embodiments refers to the accompanying drawings. The same reference numbers in different drawings identify identical or similar elements. Moreover, the drawings are not necessarily to scale. The detailed description below does not limit the invention. Rather, the scope of the invention is defined by the appended claims.

Reference in the description to "an embodiment" or "the embodiment" or "some embodiments" means that a particular characteristic, structure or element described in relation to an embodiment is included in at least one embodiment of the object described. Therefore, the phrase "in an embodiment" or "in the embodiment" or "in some embodiments" in various points throughout the description does not necessarily refer to the same embodiment or embodiments. Moreover, the particular characteristics, structures or elements can be combined in any suitable manner in one or more embodiments.

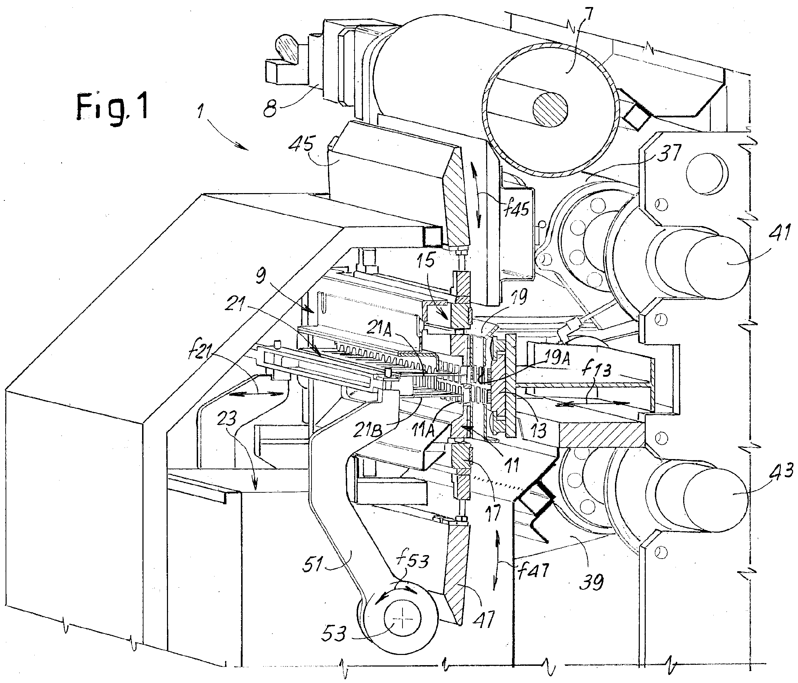

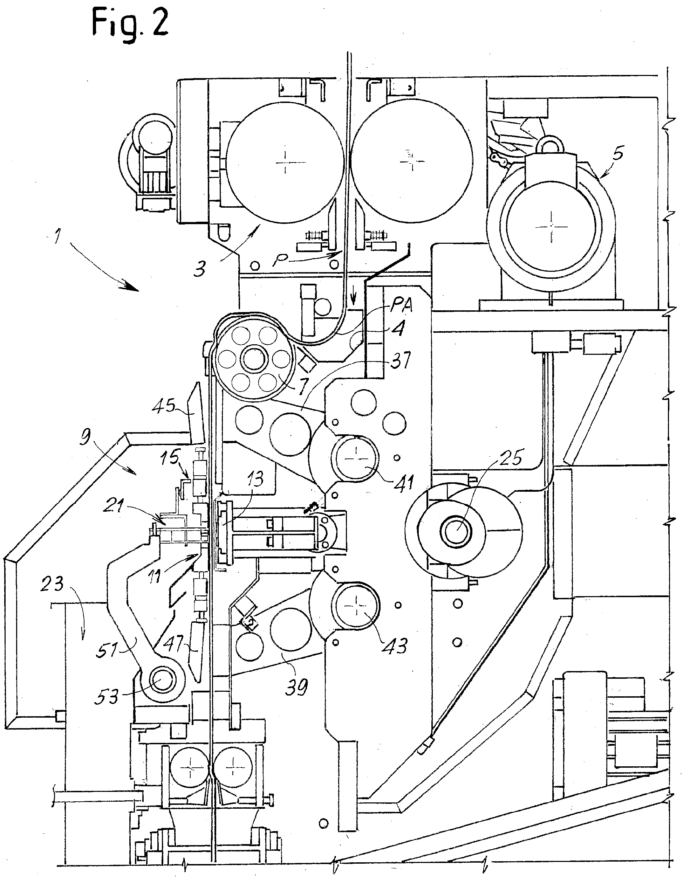

Figs. 1 and 2 show the main members of a cutting and folding machine, indicated as a whole with 1. The cutting and folding machine comprises a calender 3 operated by a motor 5, through which the continuous sheet of pasta, indicated with P, passes. Downstream of the calender 3 along the path of the pasta P there is arranged a feed roller 7 operated with intermittent rotational motion to feed the pasta P stepwise toward a cutting and folding unit, indicated as a whole with 9.

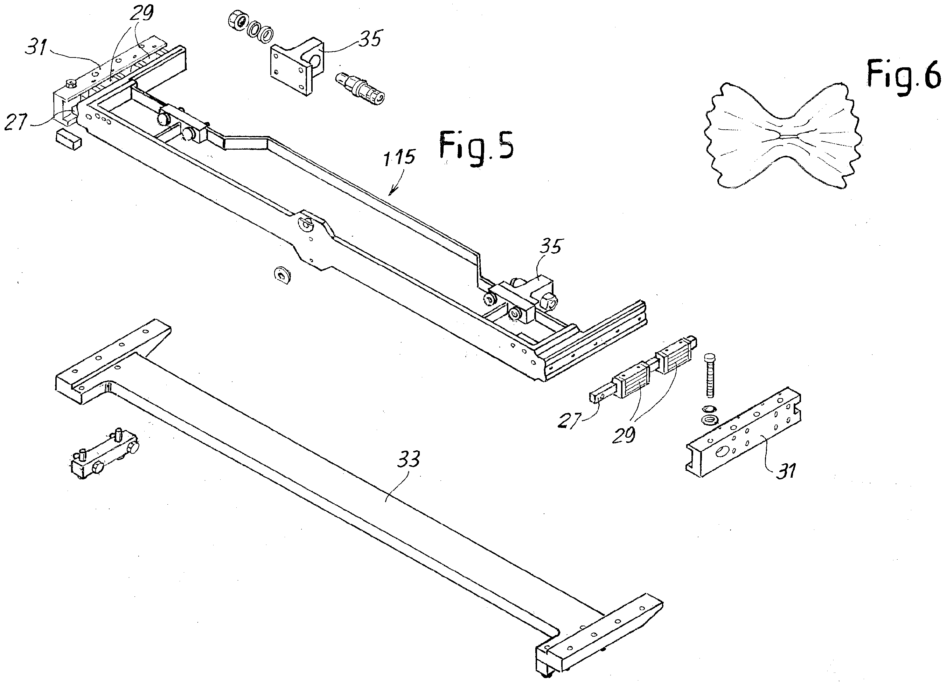

The cutting and folding unit 9 comprises a die 11 and a punch 13 cooperating with one another to cut the continuous pasta P and obtain therefrom single pieces that form the pasta destined for packaging. Fig.6 shows a type of folded pasta that can be obtained with the machine in question. In this case, this is pasta in the form of a "bow tie", obtained from a rectangle of cut pasta, with scalloped edges and a central area folded to form a bow tie.

The die 11 is fastened in a fixed position to the machine structure, while the punch 13 is provided with a reciprocal movement according to f13 and for this purpose is fastened removably on a slide 115, illustrated in detail in Fig.5 and described in greater detail below. Both the punch and the die are interchangeable to produce different types of pasta. In the illustrated example the die is double and has a double row of compartments or cells 11 A into which the respective cutting projections 13A of the punch 13 are inserted.

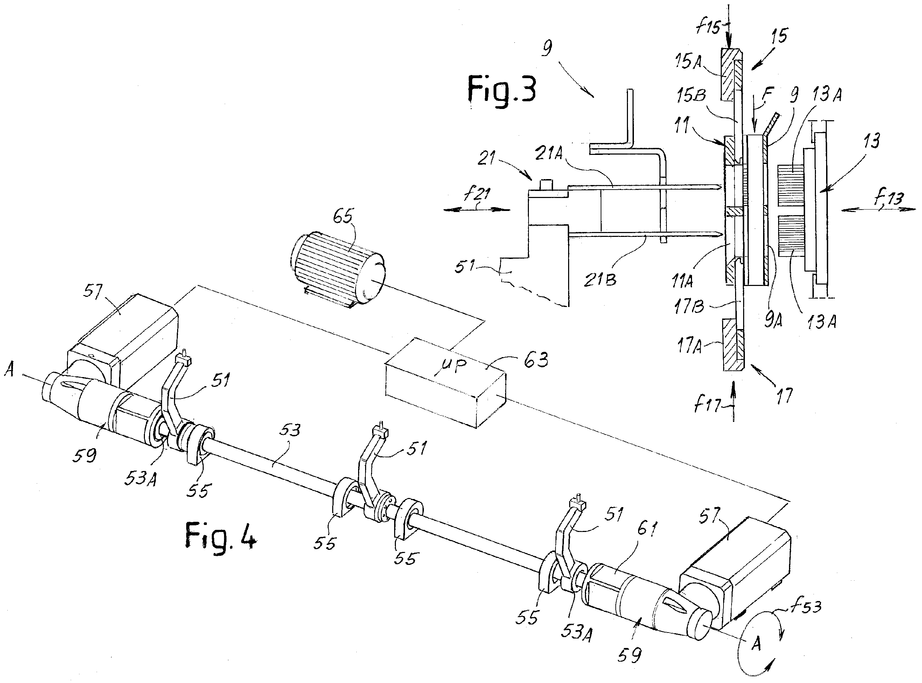

Two folding hands, indicated as a whole with 15 and 17, cooperate with the die 11. The upper folding hand 15 comprises a beam 15A to which folding fingers 15B are fastened, the same in number as the number of compartments or cells 11A of the die 11. Each folding finger 15B penetrates the body of the die until reaching a respective compartment or cell 11A (Fig.3). Similarly, the lower folding hand 17 comprises a beam 17A to which folding fingers 17B are fastened, aligned with the folding fingers 15B and arranged to each penetrate a respective compartment or cell 11 A of the die 11. In a manner known per se, the two folding hands 15 and 17 are provided with a reciprocating motion according to f15 and f17 respectively, synchronized with the movement of the punch 13, so as to generate the central fold of the single rectangles of pasta (Fig.6), after these have been obtained by cutting through penetration of the cutting projections 13A of punch 13 in the respective compartments or cells 11A of the die.

Between the die 11 and the punch 13, in the extracted position, there is arranged a fixed plate 19 with openings 19A corresponding to the cutting projections 13A and to the compartments or cells 11A of the die 11, to prevent the pasta cut in the die from adhering to the punch and being accidentally extracted thereby.

An extractor comb 21 cooperates with the die 11. In the example illustrated, the extractor comb 21 is double, as the die 11 and the punch 13 are also double, i.e. provided with a double series of compartments or cells 11A and cutting projections 13A arranged in two opposite rows. Consequently, the extractor comb 21 has two superimposed rows of stems or prongs 21A, 21B. The extractor comb 21 supports the pieces of cut pasta in the compartments or cells 11A of the die 11 during folding and extracts the cut and folded pasta causing it to fall along a chute into a hopper 23.

The reciprocating movement according to f13 of the slide 115 is obtained through an eccentric mechanism, the shaft of which is indicated with 25. The slide 115 is shown in an exploded view in Fig.5, with the punch 13 being removed. Fig. 5 also shows the lateral guides 27 fastened laterally to the slide 115, which each engage in two recirculating ball sliding blocks 29 in turn fastened to the fixed structure of the machine and more in particular in profiles 31, in turn constrained to a lower fixed cross member 33.

The same motorization, not shown, that operates the shaft 25, also controls oscillation of two pairs of arms 37, 39 fastened on the shafts 41, 43. The arms 37 carry an upper oscillating cross member 45, while the arms 39 carry a lower oscillating cross member 47. The upper oscillating cross member 45 is provided with an oscillating movement according to the double arrow f45 around the shaft 41, while the lower oscillating cross member 47 is provided with an oscillating movement according to the double arrow f45 around the shaft 43. The two oscillating movements are transmitted to the two folding hands, respectively the upper arm 15 and the lower arm 17.

Therefore, a same motorization controls the cutting movement (punch 13, carried by the slide 115) and the folding movement (folding hands 15, 17).

The reciprocating movement according to f21 of the extractor comb 21 is imparted by a separate mechanism, shown isolated and in a perspective view in Fig. 4 and described below. The extractor comb 21 is constrained to a plurality of oscillating arms 51. In the example illustrated three arms 51 are provided, but their number can vary, for instance depending upon the width of the cutting and folding machine 1 and therefore of the length of the extractor comb 21. The arms 51 are fitted and therefore torsionally constrained to a rotating shaft 53 provided with a reciprocating rotational movement according to f53 about its own axis A-A. The shaft 53 is supported by supports 55 and projects with the ends 53A thereof from the outermost supports 55. An electronically controlled electric motor 57, for example a brushless motor, is associated at each end 53A of the shaft 53. In the embodiment illustrated, each electric motor 57 is connected to the respective end 53A of the shaft 53 through an angular gear box 59. The output of the angular gear box 59 is connected to the corresponding end 53A of the shaft through a flexible coupling housed in a support element 61 to which the gear box 59 is fastened with the motor 57 and into which the end 53A of the shaft 53 is inserted.

The reciprocating rotational movement of the shaft 53 and therefore the reciprocating movement imparted by this latter through the oscillating arms 51 to the extractor comb 21 is therefore controlled by the two electric motors 57 that are managed by a programmable controller or by a microprocessor, schematically indicated with 63 in Fig. 4, which also controls the movement of the main motorization of the machine. In Fig.4 the main motorization is schematically represented with one motor 65, it being understood that in actual fact the machine can also have more than one motor to operate the remaining members. For example, the feed roller 7 can be operated by an electronically controlled electric motor 8, typically a brushless motor, also controlled by a programmable controller or by a microprocessor 63. In this way, all the members of the cutting and folding machine 1, even if controlled in movement by autonomous motors, can be managed in a synchronized and coordinated manner, as required to perform all the movements in the correct time sequence.

Operation of the cutting and folding machine 1 described above substantially corresponds to that of prior art machines and can be summed up as follows. The calender 3 feeds, preferably with continuous motion, the pasta P downward, optionally creating a spare loop indicated with PA in Fig.1. The spare pasta PA can rest on a chute or cradle 4. The pasta P is then fed stepwise by the feed roller 7 toward the cutting and folding unit 9, passing between the die 11 and the plate 19. At each step, the continuous pasta P stops and the punch 13 performs the cut pushing the pasta inside the compartments or cells 11A of the die 11. While the punch performs the movement of extraction from the die, the folding hands 15, 17 move toward each other, performing folding of the pieces of pasta in the cells 11A. In a manner coordinated with the movement of the punch, the extractor comb 21 is inserted with its teeth or prongs 21 A, 21B into the cells or compartments 11A of the two series of cells of the die 11. Once folding has been performed, the extractor comb moves away from the die 11 extracting the cut and folded pasta and causing it to fall into the collection hopper 23.

The embodiment of the operating mechanism of the comb 21 with the electric motors 57 enables a balanced movement of the shaft 53 to be obtained, substantially without torsional deformations, leaving the whole of the area below, in which the hopper 23 is located, free.

The use of autonomous motors to control the extractor comb 21 enables the extractor comb to be moved manually when the cutting and folding machine 1 is not operating, for example to carry out maintenance or adjustments. This operation is not possible in conventional machines where the extractor comb is constrained through a kinematic chain to all the remaining moving members and to the main motorization.

In less advantageous embodiments, only one electronically controlled electric motor can be provided at only one end of the shaft 53, but in this case the cross section of the shaft 53 must be sized in order to sufficiently reduce the torsional deformations. In other embodiments a single electric motor could be arranged in a central position of the shaft 53, but this requires an adequate space to be provided in this area, with consequent structural drawbacks.

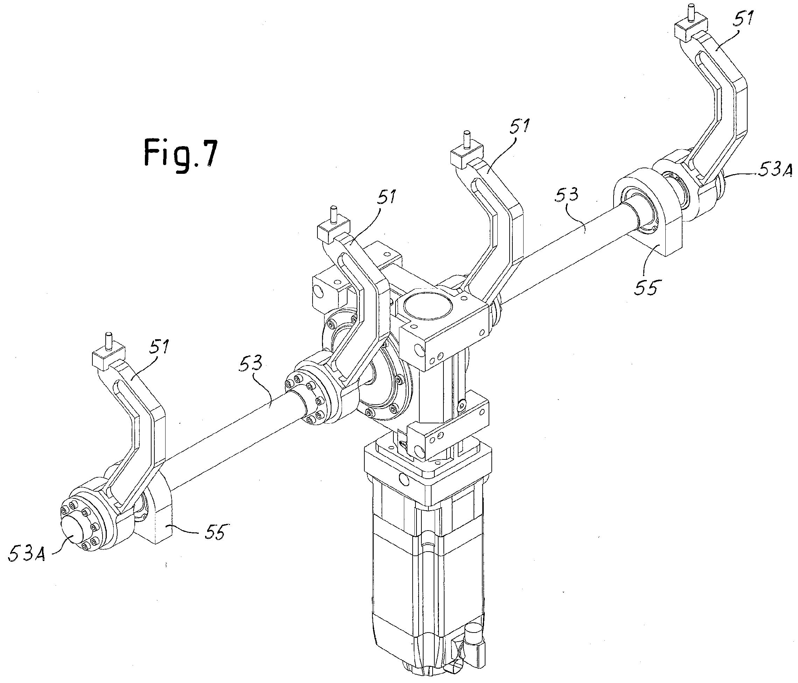

Fig.7 shows a modified of embodiment, in a view similar to the view of Fig.4. In this embodiment, the shaft 53 is provided with a single motor 57 arranged between the ends 53A of the shaft. Arms 51 are arranged between the motor and each of the two ends 53A of the shaft. This configuration, which is particularly suitable in the case of machines with limited transverse dimensions, enables symmetrical stress of the shaft 53 with a single motor 57.

In the embodiments described above the extractor comb 21 is driven into motion by a shaft 53 provided with a reciprocating rotation movement about the axis thereof, controlled by rotary motors. In other embodiments, the shaft can be provided with a reciprocal translational movement, for example controlled by one or two electronically controlled linear electric motors. Appropriate linear guides enable correct movement of the shaft.

The shaft can be formed by a substantially cylindrical elongated body, as shown in the accompanying figures. In other embodiments, a shaft or moving element of another form can be provided, such as in the form of a beam or other body preferably elongated in shape, extending parallel to the extractor comb 21 and therefore transversely with respect to the machine.

The embodiments described above and illustrated in the drawings have been discussed in detail as examples of embodiment of the invention. Those skilled in the art will understand that many modifications, variants, additions and omissions are possible, without departing from the principles, concepts and teachings of the present invention as defined in the appended claims. Therefore, the scope of the invention must be determined purely on the basis of the broadest interpretation of the appended claims, comprising these modifications, variants, additions and omissions therein. The term "comprise" and derivatives thereof do not exclude the presence of further elements or steps besides those specifically indicated in a given claim. The term "a" preceding an element, means or characteristic of a claim does not exclude the presence of a plurality of these elements, means or characteristics. When a device claim lists a plurality of "means", some or all of these "means" can be implemented by a single component, member or structure. The stating of given elements, characteristics or means in distinct dependent claims does not exclude the possibility of said elements, characteristics or means being combined with one another. When a method claim lists a sequence of steps, the sequence in which these steps are listed is not binding, and can be modified, if the particular sequence is not indicated as binding. Any reference numbers in the appended claims are provided to facilitate reading of the claims with reference to the description and to the drawing, and do not limit the scope of protection represented by the claims.

## Claims

1. A cutting and folding machine for producing pasta comprising:
- a die (11);
- a punch (13) cooperating with said die (11);
- folding hands (15, 17) cooperating with said die (11), the folding hands (15, 17) being provided with motorization ;
- at least one extractor comb (21) to extract the cut and folded pasta from said die, said at least one extractor comb being carried by arms (51) constrained to an element (53) operated with reciprocating motion;
- kinematic mechanisms for synchronized movement of said punch (13) and of said folding hands (15, 17);
**characterized in that** said element (53) to which the arms (51) are constrained is operated with reciprocating motion by:
at least one electric motor separate with respect to the motorization of said folding hands (15, 17)
and to said punch (13) and controlled electronically in synchronism with the movement of the folding hands (15, 17) and of the punch (13), said electric motor being arranged in an intermediate position between the ends (53A) of the moving element (53); or
two electric motors (57) positioned at opposite ends (53A) of said element (53) and controlled in synchronism with each other.

2. The machine as claimed in claim 1, **characterized in that** said element (53) is a shaft operated with a reciprocating rotational motion about the axis thereof (A-A), by means of said at least one electric motor.

3. The machine as claimed in claim 2, **characterized in that** said shaft is operated with a reciprocating rotational motion about the axis thereof by the two electric motors (57) positioned at the opposite ends (53A) of said shaft and controlled in synchronism with each other.

4. The machine as claimed in claim 1, **characterized in that** said at least one electric motor is arranged in an intermediate position of the element, between the ends thereof, and **in that** between each end (53A) of the element (53) and the motor there are positioned one or more of said arms (51) carrying the extractor comb (21).

5. The machine as claimed in claim 2, **characterized in that** said at least one electric motor is arranged in an intermediate position of the shaft (53), between the ends (53A) thereof, and **in that** between each end (53A) of the shaft (53) and the motor there are positioned one or more of said arms carrying the extractor comb.

6. The machine as claimed in one or more of the preceding claims, **characterized in that** said electric motor or motors are connected to said element or to said shaft through a gear box (59).

7. The machine as claimed in one or more of the preceding claims, **characterized in that** between said at least one electric motor or each of said electric motors (57) and said element (53) or said shaft there is arranged a flexible coupling.

8. The machine as claimed in one or more of the preceding claims, **characterized in that** said electric motor or motors (57) are brushless motors.

9. The machine as claimed in at least claim 1, **characterized in that** said electric motor or motors (57) are linear electric motors and **in that** said element (53) is provided with a reciprocating translational motion in a direction orthogonal to the longitudinal extension of said element.

10. The machine as claimed in one or more of the preceding claims, **characterized in that** said punch (13) is carried by a slide (115) guided through recirculating ball sliding blocks (29).

11. The machine as claimed in one or more of the preceding claims, **characterized in that** said punch (13) and said hands (15, 17) are controlled by a single electric motor, separate from the motor or motors (57) that operate the extractor comb (21).

## Patentansprüche

1. Maschine zum Schneiden und Falten für die Herstellung von Teigwaren, die Folgendes umfasst:
- eine Matrize (11);
- einen Stempel (13), der mit der Matritze (11) zusammenwirkt;
- Falthände (15, 17), die mit der Matrize (11) zusammenwirken, wobei die Falthände (15, 17) mit Motorisierung versehen sind;
- mindestens einen Extraktorkamm (21) zum Herausnehmen der geschnittenen und gefalteten Teigwaren aus der Matrize, wobei der mindestens eine Extraktorkamm durch Arme (51) getragen wird, die mit einem Element (53) verbunden sind, das mit einer Hin- und Herbewegung betrieben wird;
- kinematische Mechanismen zur synchronisierten Bewegung des Stempels (13) und der Falthände (15, 17);
**dadurch gekennzeichnet, dass** das Element (53), mit dem die Arme (51) verbunden sind, mit einer Hin- und Herbewegung betrieben wird durch:
mindestens einen Elektromotor, der hinsichtlich der Motorisierung der Falthände (15, 17) und des Stempels (13) separat ist und synchron mit der Bewegung der Falthände (15, 17) und des Stempels (13) elektronisch gesteuert ist, wobei der Elektromotor in einer Zwischenposition zwischen den Enden (53A) des sich bewegenden Elements (53) angeordnet ist; oder
zwei Elektromotoren (57), die an entgegengesetzten Enden (53A) des Elements (53) angeordnet sind und synchron miteinander gesteuert sind.

2. Maschine gemäß Anspruch 1, **dadurch gekennzeichnet, dass** das Element (53) eine Welle ist, die mittels des mindestens einen Elektromotors mit einer Hin- und Herdrehbewegung um ihre Achse (A-A) betrieben wird.

3. Maschine gemäß Anspruch 2, **dadurch gekennzeichnet, dass** die Welle durch die zwei Elektromotoren (57), die an den entgegengesetzten Enden (53A) der Welle positioniert und synchron miteinander gesteuert sind, mit einer Hin- und Herdrehbewegung um ihre Achse betrieben wird.

4. Maschine gemäß Anspruch 1, **dadurch gekennzeichnet, dass** der mindestens eine Elektromotor in einer Zwischenposition des Elements, zwischen dessen Enden, angeordnet ist und dass zwischen jedem Ende (53A) des Elements (53) und dem Motor ein oder mehrere der Arme (51), die den Extraktorkamm tragen, positioniert sind.

5. Maschine gemäß Anspruch 2, **dadurch gekennzeichnet, dass** der mindestens eine Elektromotor in einer Zwischenposition der Welle (53), zwischen deren Enden (53A), angeordnet ist und dass zwischen jedem Ende (53A) der Welle (53) und dem Motor ein oder mehrere der Arme, die den Extraktorkamm tragen, angeordnet sind.

6. Maschine gemäß einem oder mehreren der vorhergehenden Ansprüche, **dadurch gekennzeichnet, dass** der Elektromotor oder die Elektromotoren mit dem Element oder mit der Welle durch ein Getriebe (59) verbunden sind.

7. Maschine gemäß einem oder mehreren der vorhergehenden Ansprüche, **dadurch gekennzeichnet, dass** zwischen dem mindestens einen Elektromotor oder jedem der Elektromotoren (57) und dem Element (53) oder der Welle eine bewegliche Kupplung angeordnet ist.

8. Maschine gemäß einem oder mehreren der vorhergehenden Ansprüche, **dadurch gekennzeichnet, dass** der Elektromotor oder die Elektromotoren (57) bürstenlose Motoren sind.

9. Maschine gemäß mindestens Anspruch 1, **dadurch gekennzeichnet, dass** der Elektromotor oder die Elektromotoren (57) elektrische Linearmotoren sind und dass das Element (53) mit einer translatorischen Hin- und Herbewegung in einer Richtung rechtwinklig zu der Längserstreckung des Elements bereitgestellt ist.

10. Maschine gemäß einem oder mehreren der vorhergehenden Ansprüche, **dadurch gekennzeichnet, dass** der Stempel (13) durch einen Schieber (115) getragen wird, der durch Kugelrollbacken (29) geführt ist.

11. Maschine gemäß einem oder mehreren der vorhergehenden Ansprüche, **dadurch gekennzeichnet, dass** der Stempel (13) und die Hände (15, 17) durch einen einzelnen elektrischen Motor, separat von dem Motor oder den Motoren (57), die den Extraktorkamm (21) betreiben, gesteuert sind.

## Revendications

1. Une machine de découpe et de pliage pour produire des pâtes comprenant :
- une filière (11) ;
- un poinçon (13) coopérant avec ladite filière (11) ;
- des poignées de pliage (15, 17) coopérant avec ladite filière (11), les poignées de pliage (15, 17) étant pourvues d'une motorisation ;
- au moins un peigne d'extraction (21) pour extraire la pâte découpée et pliée de ladite filière, ledit peigne d'extraction étant supporté par des bras (51) fixés à un élément (53) animé d'un mouvement de va-et-vient ;
- des mécanismes cinématiques pour le déplacement synchronisé dudit poinçon (13) et desdites poignées de pliage (15, 17) ;
**caractérisée en ce que** ledit élément (53) auquel les bras (51) sont fixés est animé d'un mouvement de va-et-vient par :
au moins un moteur électrique séparé de la motorisation desdites poignées de pliage (15, 17)
et dudit poinçon (13) et commandé électroniquement en synchronisation avec le mouvement des poignées pliables (15, 17) et du poinçon (13), ledit moteur électrique étant agencé dans une position intermédiaire entre les extrémités (53A) de l'élément en mouvement (53) ; ou
les deux moteurs électriques (57) positionnés à des extrémités opposées (53A) dudit élément (53) et commandés en synchronisation l'un avec l'autre.

2. La machine selon la revendication 1, **caractérisée en ce que** ledit élément (53) est un arbre animé d'un mouvement de va-et-vient en rotation autour de son axe (A-A) au moyen dudit ou desdits moteur(s) électrique(s).

3. La machine selon la revendication 2, **caractérisée en ce que** ledit arbre est animé d'un mouvement de va-et-vient en rotation autour de son axe par les deux moteurs électriques (57) positionnés aux extrémités opposées (53a) dudit arbre et commandés en synchronisation l'un avec l'autre.

4. La machine selon la revendication 1, **caractérisée en ce que** le(s)dit(s) moteur(s) électrique(s) est/sont agencé(s) dans une position intermédiaire de l'élément, entre ses extrémités, et **en ce qu'**entre chaque extrémité (53A) de l'élément (53) et le moteur sont positionnés un ou plusieurs desdits bras (51) portant le peigne d'extraction (21).

5. La machine selon la revendication 2, **caractérisée en ce que** le(s)dit(s) moteur(s) électrique(s) est/sont agencés dans une position intermédiaire de l'arbre (53), entre les extrémités (53A) de celui-ci, et **en ce qu'**entre chaque extrémité (53A) de l'arbre (53) et le moteur sont positionnés un ou plusieurs desdits bras portant le peigne d'extraction.

6. La machine selon une ou plusieurs des revendications précédentes, **caractérisée en ce que** ledit ou lesdits moteur(s) électrique(s) est/sont connectés audit élément ou audit arbre par l'intermédiaire d'une boîte de vitesses (59).

7. La machine selon une ou plusieurs des revendications précédentes, **caractérisée en ce qu'**entre ledit moteur électrique ou chacun desdits moteurs électriques (57) et ledit élément (53) ou ledit arbre, est agencé un couplage flexible.

8. La machine selon une ou plusieurs des revendications précédentes, **caractérisée en ce que** ledit ou lesdits moteur(s) électrique(s) (57) est/sont des moteurs sans balais.

9. La machine selon la revendication 1 au moins, **caractérisée en ce que** ledit ou lesdits moteur(s) électrique(s) (57) est/sont un/des moteur(s) électrique(s) linéaire(s) et **en ce que** ledit élément (53) est animé d'un mouvement de va-et-vient en translation dans une direction orthogonale à l'extension longitudinale dudit élément.

10. La machine selon une ou plusieurs des revendications précédentes, **caractérisée en ce que** ledit poinçon (13) est porté par un coulisseau (115) guidé par l'intermédiaire de blocs coulissants à billes recirculantes (29).

11. La machine selon une ou plusieurs des revendications précédentes, **caractérisée en ce que** ledit poinçon (13) et lesdites poignées (15, 17) sont commandés par un unique moteur électrique, séparé du moteur ou des moteurs (57) qui entraîne le peigne d'extraction (21).
